# EUROPEAN PATENT SPECIFICATION

(11) **EP 3 023 392 B1**
(45) Date of publication and mention of the grant of the patent: **21.11.2018**
(21) Application number: 14194376.1
(22) Date of filing: 21.11.2014
(51) Int. Cl.: C02F 1/46, A61L 2/14

(54) **DEVICE, SYSTEM AND METHOD FOR THE TREATMENT OF LIQUID WASTE WATERS**
VORRICHTUNG, ANLAGE UND VERFAHREN ZUR ABWASSERBEHANDLUNG
APPAREIL, SYSTEME ET PROCEDE DE TRAITEMENT DES EAUX POLLUEES

(43) Date of publication of application: 25.05.2016
(73) Proprietor: Iris S.r.l., 10135 Torino (IT); LaserLam S.r.l., 10121 Torino (IT)
(72) Inventor: Lai, Manuel, I-10134 Torino (IT); Molinari, Giulia, I-10134 Torino (IT); Fascetti, Marco, I-54011 Albiano Magra, Aulla (Messina) (IT); Bertini, Silverio, I-10138 Torino (IT)
(74) Representative: De Bonis, Paolo

(56) References cited:
- GB-A- 2 497 546
- JP-A- 2002 263 471
- US-A- 5 601 633
- US-A1- 2005 189 278
- US-A1- 2014 014 516

## Description

The present invention relates to a device, a system, and a method for the treatment of liquid effluents (wastewaters). An example of treatment devices of a known type may be found, for example, in the document No. WO2013/079858 A1.

### Description of the prior art and general technical problem

Various systems of a known type for treating effluents rely upon the use of one or more of the following treatment means for formation of reactive chemical species that react with and break down the undesirable substances in the effluent:
- ultraviolet radiation (UV-C);
- high local temperature;
- high-pressure waves;
- acoustic waves; and
- high-intensity electrical field.

For instance, the document No. WO2013/079858 A1 mentioned previously relates to a system for treating liquid and gaseous effluents, where the effluent is subjected to the combined action of a plasma discharge generated by two opposed electrodes and of ultraviolet radiation generated by a system of separate lamps inserted in a bed of porous microbeads that act as photocatalysts.

However, the device described in the aforesaid document envisages generation of the plasma discharge with a voltage of between 5 V and 220 V. It is, however, known that at this voltage it is not possible to achieve dielectric breakdown in aqueous liquids, which prevents treatment of these liquids in a direct way with cold plasma in this type of device.

This dictates, precisely, adoption of a separate system for emission of ultraviolet radiation for treating effluents using a photocatalyst, with evident complications of a structural nature of the treatment device, as well as with consequent and evident complications in terms of flexibility of the solution.

### Object of the invention

The object of the invention is to overcome the technical problems mentioned previously. In particular, the object of the invention is to provide a method, a system, and a device for the treatment of liquid effluents that enable an effective treatment of the effluents, including the aqueous effluents, with maximized effectiveness, and without the need to provide a number of treatment sources, where the term "treatment sources" is used to identify in a generic way one or more devices designed to generate the aforementioned treatment means (for example, plasma discharge and ultraviolet radiation).

In particular, the object of the invention is achieved by a method according to claim 1 for supplying a device for plasma treatment of liquid effluents, wherein the device comprises a casing defining a treatment volume and a first electrode and a second electrode facing into said treatment volume, the method comprising the steps of:
- providing a supply source coupled to a pulse generator including a high-voltage generator and a nanopulse generator;
- connecting said first electrode to a high-voltage electrode of said nanopulse generator;
- providing a high-voltage switch having a variable width discharge gap comprised between a third electrode and a fourth electrode, where said third electrode is connected to said second electrode, and said fourth electrode is connected to a ground electrode of said nanopulse generator; and
- supplying a circuit of said nanopulse generator and activating one or more discharges thereof so as to generate corresponding one or more voltage pulses resulting in corresponding one or more electric discharges between said first and second electrodes,
wherein each electric discharge occurs when a voltage value of said voltage pulse reaches a threshold value that causes dielectric breakdown in said discharge gap of variable width.

Furthermore, the object of the invention is achieved by a system according to claim 2 for the treatment of liquid effluents by means of electric discharges, the system comprising:
- a treatment device including a casing defining a treatment volume and a first electrode and a second electrode set opposed to one another and facing into said treatment volume;
- an inlet orifice configured for the inlet of a flow rate of liquid effluent to be treated into said treatment volume and at least one outlet orifice configured for receiving and disposing of the liquid effluent treated in said treatment volume;
- a pulse generator including a high-voltage generator coupled to a nanopulse generator, said nanopulse generator having a high-voltage electrode connected to said first electrode; and
- a high-voltage switch having a variable width discharge gap defined between a third electrode and a fourth electrode, wherein said third electrode is connected to said second electrode, whereas said fourth electrode is connected to a ground electrode of said nanopulse generator.

The object of the invention is achieved in further developments of the invention, as defined in the dependent claims, by a treatment device for plasma treatment of liquid effluents including:
- a casing defining a treatment volume; and
- a first electrode and a second electrode opposed to one another and facing into said treatment volume, wherein:
- said treatment volume is divided into a core section into which said first and second electrodes face and a shell section that surrounds said core section;
- in said shell section there is provided a treatment jacket for the liquid effluent including a plurality of beads coated with a photocatalyst;
- the casing includes an inlet orifice for inlet of a flow rate of effluent to be treated, which is in fluid communication with said core section, and at least one outlet orifice configured for disposing of the flow of treated liquid effluent, which is in fluid communication with said shell section; and
- wherein at least one of said first and second electrodes is movable with respect to the other for varying the width of a discharge gap between them.

### Summary of the invention

The object of the invention is achieved by a a system and a method for the treatment of liquid effluents having the characteristics forming the subject of the ensuing claims, which form an integral part of the technical teaching provided herein in relation to the invention.

### Brief description of the drawings

Various preferred embodiments of the invention will now be described with reference to the annexed drawings, which are provided purely by way of nonlimiting example, and wherein:
- Figure 1 is a schematic view of a system for treating effluents according to various preferred embodiments of the invention;
- Figure 2 is a schematic cross-sectional view of a device for treating liquid effluents according to various preferred embodiments of the invention;
- Figure 3 is a circuit diagram of a component of the treatment system according to the invention;
- Figure 4 includes three portions A, B, C, where each portion represents a different operating mode of the treatment device according to the invention;
- Figure 5 includes two portions A and B, wherein portion A represents an ideal time plot of the voltage signal across the treatment device, whereas portion B represents an ideal time plot of the current circulating between the electrodes of the treatment device;
- Figure 6 includes two portions A and B, wherein portion A represents a time plot of the voltage signal across the treatment device upon occurrence of a first operating condition, whereas portion B represents a time plot of the voltage signal across the treatment device upon occurrence of a second operating condition; and
- Figure 7 represents a time plot of a current signal at input to the treatment device according to the invention.

### Detailed description of preferred embodiments

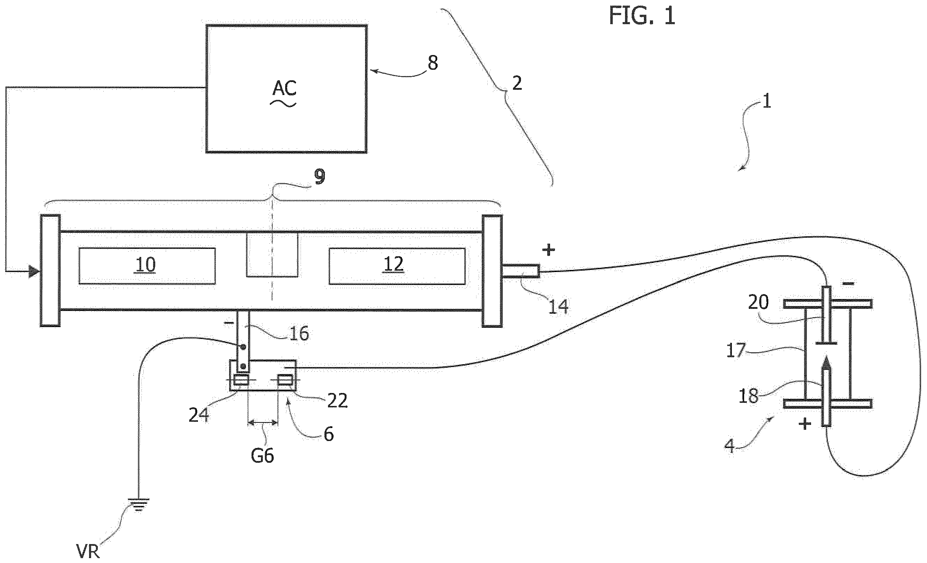

In Figure 1 the reference number 1 designates as a whole a system for the treatment of liquid effluents according to various preferred embodiments of the invention. The system 1 includes a supply source 2, an effluent treatment device 4, and a high-voltage switch 6 having a variable width discharge gap G6. The supply source 2 includes in various embodiments an AC power supply 8, the terminals of which are connected to the input terminals of a pulse generator 9. The power supply 8 operates by drawing off electrical energy from the mains supply so that it works with a voltage of 220 V at industrial frequency (50 Hz).

The pulse generator 9 in turn includes a high-voltage generator 10 connected to a nanopulse generator 12.

The high-voltage generator 10, which is per se known, receives the supply directly from the power supply 8 and includes a first stage configured for rectification of the input current and subsequent conversion into DC current, and a second stage wherein a transformation is provided that increases the voltage into the high-voltage range.

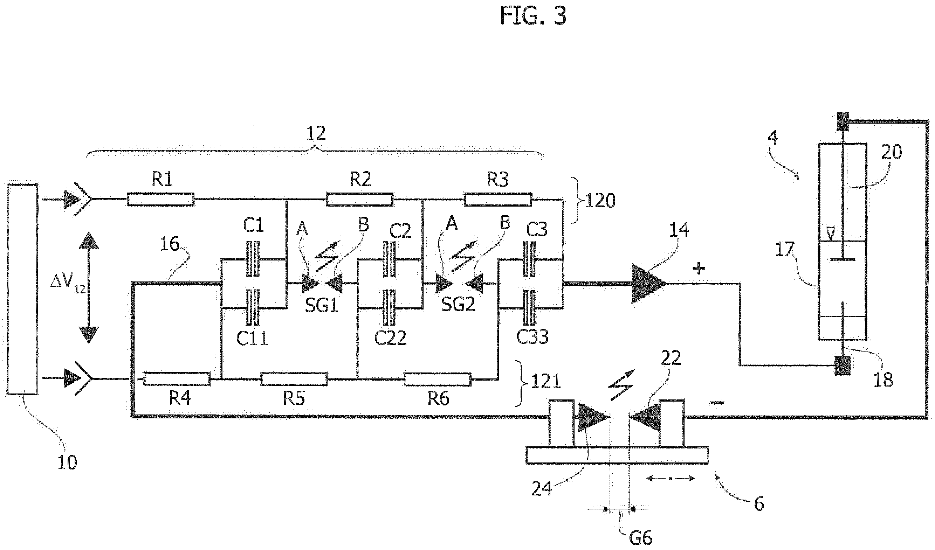

The output terminals of the high-voltage generator 10 are connected to the input terminals of the nanopulse generator 12, the detail of which is represented in Figure 3 and will be described hereinafter.

The nanopulse generator 12 includes a high-voltage electrode 14 and a ground electrode 16 (in Figure 1 a connection to ground is visible designated by the reference VR).

The treatment device 4 includes a casing 17, which defines within it a treatment volume for the effluent and in which, moreover, a first electrode 18 and a second electrode 20 face. The first electrode 18 is electrically connected to the high-voltage electrode 14, whereas the second electrode 20 is electrically connected to a third electrode 22, which, together with a fourth electrode 24 - the latter connected to the ground electrode 16 of the pulse generator 9 -, defines the high-voltage switch.

At least one between the electrodes 22 and 24 can be moved away from or towards the other electrode in order to vary the width of the discharge gap G6, which is comprised between the electrodes 22 and 24 themselves.

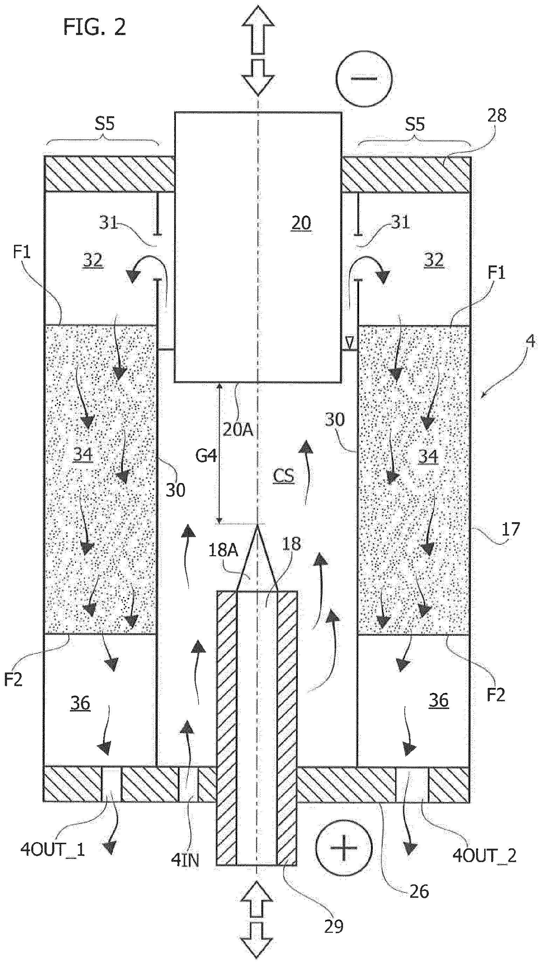

With reference to Figures 2 and 3, the details of the treatment device 4 and of the pulse generator 9, in particular of the nanopulse generator 12, will now be described.

With reference to Figure 2, the treatment device 4 includes, in addition to the components already mentioned, a first end plate 26 and a second end plate 28, which are coupled to the casing 17 and delimit it in an axial direction, also delimiting the treatment volume within the casing 17 itself. The first end plate 26 is traversed by the first electrode 18, which is mounted axially movable within the treatment volume and which is housed in a jacket of vitreous material 29. As may be seen in Figure 2, the first electrode 18 is of the tip type; i.e., it has an end region 18A having a substantially conical and pointed shape.

In the end plate 26 there are moreover provided a number of openings that include:
- an inlet orifice 4IN, which is set in a position radially closer to the electrode 18, and one or more outlet orifices 4OUT_1 and 4OUT_2, which are set in positions radially more peripheral with respect to the electrode 18.

The position of the inlet and outlet orifices is dictated, as will be seen shortly, by the partition of the treatment volume within the casing 17.

At the opposite end of the casing 17, the electrode 20 is mounted in the end plate 28 so as to be axially movable within the treatment volume. Moreover, as may be seen in Figure 2, it is of the flat type, i.e., having an end region 20A with a flattened shape. In the preferred embodiment represented in Figure 2 the electrode 20 has the shape of a squat cylindrical body made of conductive material (preferably graphite), and is set in a position opposite with respect to the electrode 18, from which it is separated by a distance (discharge gap) designated by G4. The discharge gap G4 between the electrodes 18, 20 is variable thanks to the possibility of axial movement of each of the electrodes 18, 20. Note that the same result can be achieved also having just one of the two electrodes movable, for example the electrode 20.

Set within the casing 17 is a cylindrical septum 30 mounted coaxial with respect to the casing 17, which is also cylindrical.

The cylindrical septum 30 is fixed to the end plates 26, 28 and creates a partition of the treatment volume of the device 4 into a core section CS and a shell section SS. The core section CS corresponds to a cylindrical volume that contains the electrodes 18, 20 and has a larger diameter than the electrode 20 by an amount sufficient to create an annulus around it for inlet of the fluid from the orifice 4IN.

The shell section SS is, instead, a cylindrical annular region surrounding the core section CS. The core section and the shell section CS, SS are in fluid communication through one or more radial openings 31 provided in the septum 30. The one or more radial openings 31 give out into an annular transfer chamber 32, which is radially delimited by the casing 17 and by the septum 30, whereas in an axial direction it is delimited by the end plate 28 at a first end and by a first annular filter F1 at a second end.

A second annular filter F2 is set in the proximity of the first end plate 26 so as to define an annular jacket 34, housed in which are vitreous beads (i.e., beads made of silica material) coated with a photocatalyst. In a preferred embodiment, the photocatalyst used is a film of titanium dioxide (TiO₂).

The axial extension of the jacket 34 is chosen so as to be always larger than the width of the discharge gap G4. This means that the axial length of the jacket 34 is chosen in such a way as to cover the entire range of variability of the discharge gap G4 itself.

The filter F2 delimits axially, together with the second end plate 26, an annular collecting chamber 36, which is again delimited in a radial direction by the septum 30 and the casing 17. The annular chamber 36 is thus set in a peripheral region of the treatment device 4 and is in fluid communication with the outlet orifices 4OUT_1 and 4OUT_2, for which it now becomes clear why they are positioned peripherally.

With reference to Figure 3, the circuit of the nanopulse generator 12 corresponds in this embodiment to a Marx generator, per se known. The generator 12 includes a first branch 120 and a second branch 121, in each branch 120, 121 there being set in series three resistors R1, R2, R3 and R4, R5, R6 respectively. Connected in bridge configuration between each pair of resistors on opposite branches of the circuit in the nanopulse generator are a first parallel, a second parallel, and a third parallel of capacitors.

In particular, the first parallel of capacitors includes a first capacitor C1 and a second capacitor C11 and has terminals connected one to the branch 120, the other to the branch 121, and both downstream of the resistors R1, R4.

The second parallel of capacitors includes a third capacitor C2 and a fourth capacitor C22 and has terminals connected one to the branch 120, the other to the branch 121, and both downstream of the resistors R2, R5.

The third parallel of capacitors includes a fifth capacitor C3 and a sixth capacitor C33 and has terminals connected one to the branch 120, the other to the branch 121, and both downstream of the resistors R3, R6.

Furthermore, the parallels of capacitors, which are set in succession, are connected together by means of a first high-voltage switch SG1 and a second high-voltage switch SG2, each equipped with a first electrode A and a second electrode B, wherein the electrode A is connected to the branch 120 whereas the electrode B is connected to the branch 121.

Provided that the branch 120 is connected to a high-voltage electrode of the generator 10, whereas the branch 121 is connected to ground, all the parallels of capacitors will have a terminal connected to ground and a terminal connected to the high voltage; likewise, all the high-voltage switches SG1, SG2 have the electrode A connected to the high-voltage branch, whereas the electrode B is connected to ground. Furthermore, the electrode A of each high-voltage switch is connected to the parallel of capacitors immediately upstream thereof, whereas the electrode B of each high-voltage switch is connected to the parallel of capacitors immediately downstream thereof.

In this regard, it will be noted that the high-voltage electrode 14 of the generator 12 is functionally an electrode of type A, i.e., connected to the high-voltage branch 120 and to the electrode 20, whereas the ground electrode 16 to which the electrode 24 of the high-voltage switch 6 is connected is functionally an electrode of type B.

The circuit diagram of the nanopulse generator illustrated herein is to be deemed as corresponding to a preferred solution, albeit purely representative. It will be noted in fact that the number of parallels of capacitors and of high-voltage switches may vary even significantly with respect to what is illustrated in Figure 3, according to the requirements. Of course, solutions are possible in which the nanopulse generator is provided in a way different from a Marx generator, for example a Fitch generator. In particular, as is known to the person skilled in the branch, the higher the number of parallels of capacitors and of high-voltage switches, the higher the effect of multiplication of the input voltage of the generator 12.

Operation of the system 1 is described in what follows.

The system 1 is configured for treatment of any liquid effluent (within which contaminant are present) by means of an electric discharge between the electrodes 18 and 20.

Thanks to the provision of the pulse generator 9 and of the variable-width voltage switch 6, the electric discharge between the electrodes 18, 20 can assume characteristics such as to maximize the efficiency of the treatment.

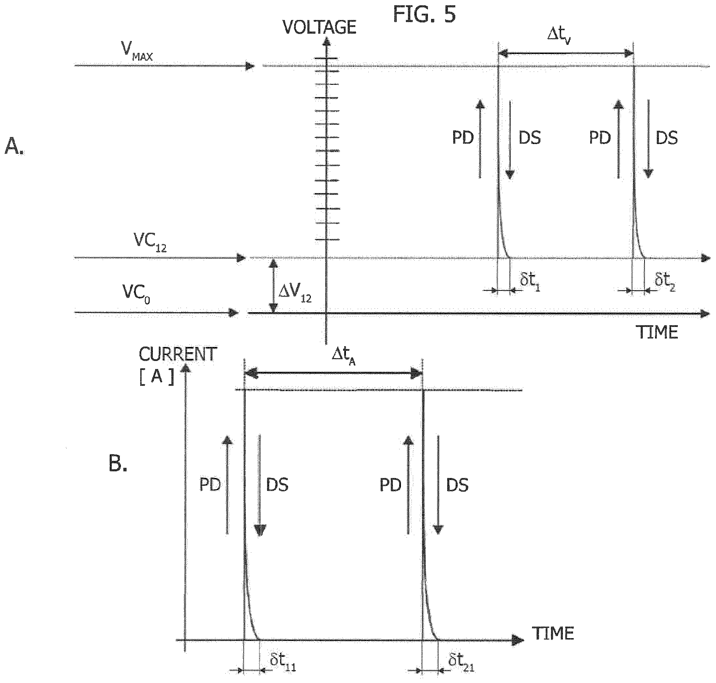

These characteristics correspond ideally to the representation of Figures 5A, 5B, i.e., that of a sequence of pulses of very short duration (typical values: 10 ns - 100 µs) and variable frequency, generally comprised in the range 1-250 Hz. The voltage pulses are moreover characterized by a voltage peak at very high values, typically comprised in the range 1-110 kV, whilst the corresponding current pulses are characterized by values of current intensity in the range 3-80 A.

As anticipated, Figure 5 illustrates the ideal time plot of the voltage signal (and the consequent current signal) that by the pulse generator 9 is imparted on the treatment device 4.

With reference, in particular, to Figure 5A, the voltage signal is ideally characterized by the presence of a stationary reference VC₁₂ that differs from a reference potential V₀ by an amount ΔV₁₂, which corresponds to the charge voltage of the nanopulse generator 12.

Each voltage pulse is characterized by a first rising edge PD, which corresponds to the discharge of the nanopulse generator, and a falling edge DS, which corresponds to the discharge process (i.e., the process of dielectric breakdown with arc discharge between the electrodes 22, 24) of the high-voltage switch 6 and to the consequent electric discharge in the discharge gap G4 between the electrodes 18, 20.

Each pulse has a duration, respectively, δt₁ and δt₂, where ideally the values δt₁ and δt₂ are identical. The successive peaks are separated from one another by a distance in time Δtᵥ, which in ideal conditions is constant in all the series of successive pulses.

Figure 5B illustrates, instead, the ideal time plot of the corresponding current signal, which has - but for the absence of the stationary reference - the same waveform as the voltage signal. In other words, the current signal is characterized by successive pulses of duration δt₁₁, δt₂₁ (which are ideally identical), each having a rising edge PD' and a falling edge DS'. The rising and falling edges PD' and DS' are associated to the occurrence of the same events previously described in relation to the edges PD, DS.

With reference to Figure 2, the treatment device 4 substantially consists of a reactor within which the effluent to be treated is introduced through the inlet orifice 4IN.

Supply of the effluent to be treated may be performed by any known system, for example a hydraulic pump driven by a motor. The liquid effluent that enters through the orifice 4IN pervades the core section CS and the discharge gap G4 between the two electrodes 18, 20.

In the discharge gap G4, the liquid effluent is subjected to an electric discharge that is triggered between the electrodes 18, 20 as a consequence of closing of the circuit by means of the discharge in the high-voltage switch 6 in the way that will be described hereinafter.

On account of the supply voltages and of the waveform of the voltage signal applied across the electrodes 18, 20, two effects are obtained that concur in maximizing the effectiveness of the treatment itself, which are described in what follows.
i) The supply with voltage pulses of extremely high amplitude (up to 110 kV) and very short duration (on average approximately 100 ns, each at a variable frequency from 1 to 250 Hz) enables setting up of the electric discharge with the maximum efficiency possible. It is in fact known that the electric discharge in liquid effluents with characteristics of conductivity higher than 70 µS is rendered difficult by the setting-up of high-density currents linked to the movement of the ions, which dissipate a considerable part of the energy introduced into the system. Application of extremely high voltages in an instantaneous and pulsed way enables setting-up of high-density currents of charged particles (i.e., a discharge) with a preferential direction, at the same time countering the phenomenon of dissipation of the charged particles themselves in non-preferential directions within the effluent, which is naturally an electric conductor.
   The inventors have noted that the dielectric breakdown with subsequent generation of plasma discharges in aqueous effluents can occur only in these conditions of supply, since outside such conditions the effectiveness of the discharge would be minimal and, as in the case of the solution described in the document mentioned at the beginning of the present description, it would require the use of supplementary devices for activation of the photocatalyst.
ii) The electric discharge in the discharge gap G4 generates a strong shock wave accompanied by setting-up of an intense electromagnetic field and of extremely high local temperatures. The electromagnetic field and the high local temperatures in the core section CS have an immediate biocidal effect on the pollutant species present within the effluent, sterilizing the liquid in a practically instantaneous way.

Furthermore, once again on account of the characteristics of the supply signal of the electrodes 18, 20, the electric discharge generated between these electrodes directly emits ultraviolet radiation, which is transmitted by irradiation from the core section CS to the shell section SS, in this way activating the photocatalyst sensitive to ultraviolet radiation and enabling a further treatment of the liquid effluent to be carried out in order to eliminate any further undesirable residual species.

As may be seen in Figure 2, after traversing the core section CS and the discharge gap G4, the liquid effluent already treated in the discharge gap G4 by the electric discharge between the electrodes 18, 20 transfers into the annular chamber 32 through the radial holes 31. From the chamber 32 the effluent percolates through the jacket of vitreous beads 34. During percolation, the liquid effluent is further treated thanks to activation of the photocatalyst, as has been said, via the ultraviolet radiation emitted by the electric discharge between the electrodes 18, 20.

Next, the completely treated effluent comes out of the jacket 34, first gathering in the annular chamber 36 and then abandoning the treatment device 4 through the orifices 4OUT_1 and 4OUT_2.

The characteristics of the electric discharge between the electrodes 18, 20 can moreover be varied according to the requirements thanks to the possibility of movement of the electrodes 18, 20 themselves with respect to one another.

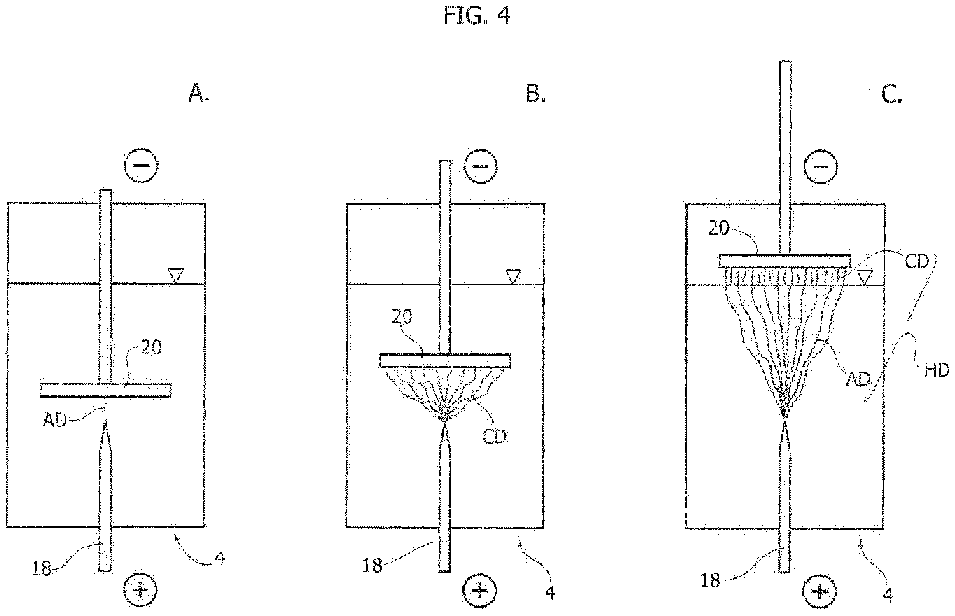

With reference to Figure 4, the treatment device 4 can operate conceptually in a way equivalent to three types of reactor represented schematically in Figures 4A, 4B, and 4C. In particular, when the discharge gap G4 is reduced to its minimum width by approach up to the limit of the electrodes 18, 20, the modalities of operation of the device 4 resemble those of a reactor with opposed electrodes, where the electrodes are both tip-shaped and between which there is consequently triggered an arc discharge AD.

By increasing the discharge gap G4 to intermediate values, the electric discharge between the electrodes 18, 20 assumes the characteristics of an indirect discharge of the corona type designated by the reference CD in Figure 4B. This discharge commonly occurs between a tip electrode (such as the electrode 18) and a flat electrode (such as the electrode 20) . Note, moreover, that in both of the situations described in Figures 4A and 4B, both of the electrodes are immersed within the liquid effluent that is treated.

By increasing once again the width of the discharge gap G4, it is possible to get the treatment device 4 to function as illustrated in Figure 4C, i.e., getting the electrode 20 to emerge from the liquid effluent, the electrode remaining above the free surface of the effluent that is being treated, and keeping the electrode 18 immersed in the effluent itself.

In this way, the characteristics of the electric discharge that is set up between the electrodes 18, 20 are of a hybrid nature. In other words, the electric discharge - here designated as a whole by the reference HD - has the characteristics of an arc discharge AD in the region comprised between the tip of the electrode 18 and the free surface of the liquid effluent, whereas it has the characteristics of a corona discharge CD in the region comprised between the free surface of the liquid effluent and the front plane surface of the electrode 20.

The possibility of varying the distance between the electrodes 18, 20 thus enables adaptation of the characteristics of the discharge to the type of contaminant present in the liquid effluent to be treated.

With reference to Figure 3, the adaptability of the treatment system 1 to different types of contaminated liquid effluents to be treated is moreover further increased thanks to the variability of the width of the high-voltage switch 6.

The above degree of freedom enables modulation of the frequency and amplitude of the voltage pulses applied across the electrodes 18, 20.

With reference to Figure 3, the nanopulse generator 12 receives a charge voltage (input voltage) from the high-voltage generator 10. As is known, the markedly capacitive behaviour of the circuit of the nanopulse generator 12 is such that phases of charging of the capacitors C1-C3 and C11-C33 followed by phases of discharging thereof upon occurrence of dielectric breakdown within the high-voltage switches SG1, SG2 continuously alternate therein.

Recalling, in fact, the general principles of operation of a Marx generator, during the charging phase all the parallels of capacitors C1-C11, C2-C22, and C3-C33 are subjected to the supply voltage ΔV₁₂ that charges the plates thereof. Simultaneously, the same difference of potential is applied across the high-voltage switches SG1 and SG2. As soon as dielectric breakdown is induced within the first of the high-voltage switches (SG1, the one upstream) the first two parallels of capacitors are connected in series so that the second high-voltage switch SG2 is subjected to application of a voltage (ideally) twice the voltage ΔV₁₂, which causes practically instantaneously immediate dielectric breakdown thereof.

In the case of a greater number of capacitors and high-voltage switches, the discharge of the circuit of the Marx generator triggers a chain effect on the high-voltage switches, which leads to setting-up of a voltage between the electrodes 14 and 16 that is equal - ideally - to n times the voltage ΔV₁₂, where n is the number of the parallels of capacitors (or of capacitors equivalent to the parallel).

At the moment of discharge of the circuit of the nanopulse generator 12, the electrodes 14 and 16 are in view of a load that includes the treatment device 4 and the high-voltage switch 6 connected in series together.

The circuit downstream of the electrodes 14, 16 is thus an open circuit on account of the absence of electric discharge between the electrodes of the high-voltage switch 6. Strictly speaking, also the discharge gap between the electrodes 18, 20 brings about in effect an opening of the electrical circuit; however, the presence of the liquid effluent between the electrodes 18, 20 bestows on the treatment device 4 a behaviour of a prevalently resistive type.

At the moment of discharge of the circuit of the nanopulse generator 12, the discharge voltage thereof is instantaneously applied across the switch 6. Given that the circuit is open, there is no passage of current within the device 4. Consequently, both the electrodes 18, 20 are subject to the same voltage, which coincides with the voltage of the electrode 14. Nevertheless, the same voltage is also applied on the electrode 22. There is no voltage drop simply owing to the fact that at the instant of start of the discharge of the generator 12 no passage of current occurs between the electrode 14 and the electrode 22. The maximum voltage that can be reached on the electrode 22 (corresponding to the maximum discharge voltage of the generator 12) depends upon the width of the gap G6, given that, as this width varies, the dielectric strength of the discharge gap G6 varies. The peak voltage corresponds in fact to the threshold voltage that causes dielectric breakdown in the switch 6. The greater the width of the gap G6, the higher its dielectric strength, and the higher the peak voltage of the process of discharge of the generator 12. The smaller the width of the gap G6, the lower its dielectric strength, and the lower the peak voltage of the process of discharge of the generator 12.

Whatever the threshold voltage value that produces dielectric breakdown of the switch 6, once this is reached, the circuit closes and the current passes through the electrodes 18, 20, on the terminals of which the same voltage difference exists as the one existing between the electrodes 14 and 16. This creates an electric discharge in the discharge gap G4, with consequent generation of plasma and treatment of the liquid between them according to the modalities and the effects described previously (see, in particular, point ii) above).

The duration, frequency, and electrical parameters of the discharge in the reaction device 4 depend upon the geometry of the switch 6, in particular upon the width of the gap G6, which can be regulated.

In particular, a high-voltage switch where the gap G6 has a smaller width will cause a discharge that has shorter duration and is characterized by a threshold voltage value for dielectric breakdown in the gap G6 that is lower (as has already been said). The frequency of the voltage pulses will, instead, be higher, in so far as the time constants of charging and discharging of the high-voltage switch 6 and of the entire generator circuit 12 are shorter on account of the lower threshold voltage of the switch 6.

Instead, a high-voltage switch, where the gap G6 has a large width will cause a discharge that is of longer duration and is characterized by a threshold voltage value for dielectric breakdown in the gap G6 that is higher (as has already been said). The frequency of the voltage pulses will, instead, be lower, in so far as the time constants of charging and discharging of the high-voltage switch 6 and of the entire generator circuit 12 are longer on account of the higher threshold voltage of the switch 6.

In brief, each voltage pulse is caused by discharging of the nanopulse generator 12, which induces dielectric breakdown and the discharge in the high-voltage switch 6, which in turn closes the circuit across the generator 12 generating the electric discharge in the discharge gap G4 between the electrodes 18, 20. The frequency, duration, and amplitude of the pulses is modulated by varying the width of the gap G6.

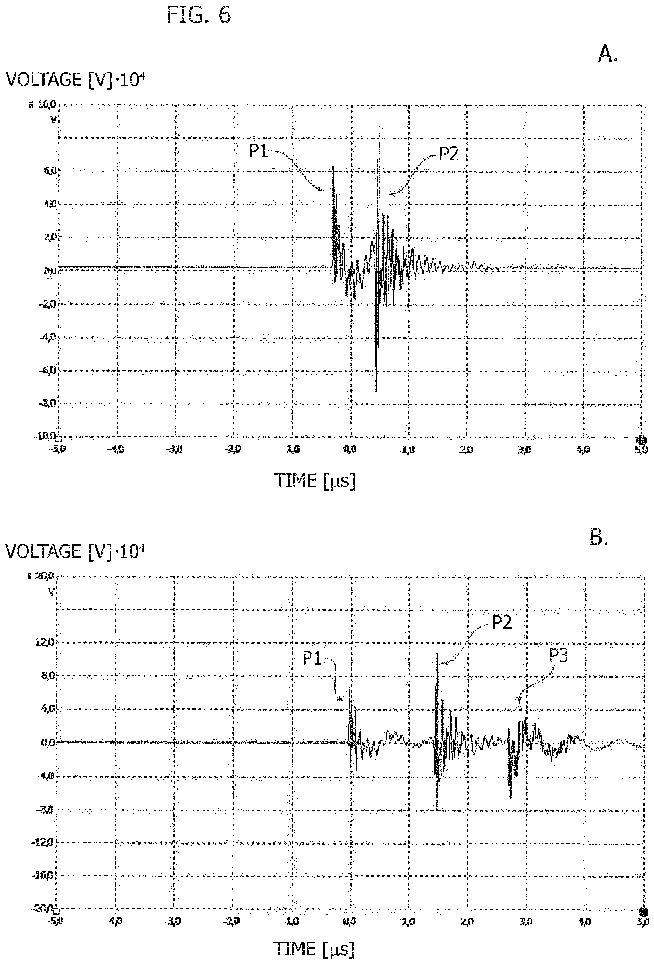

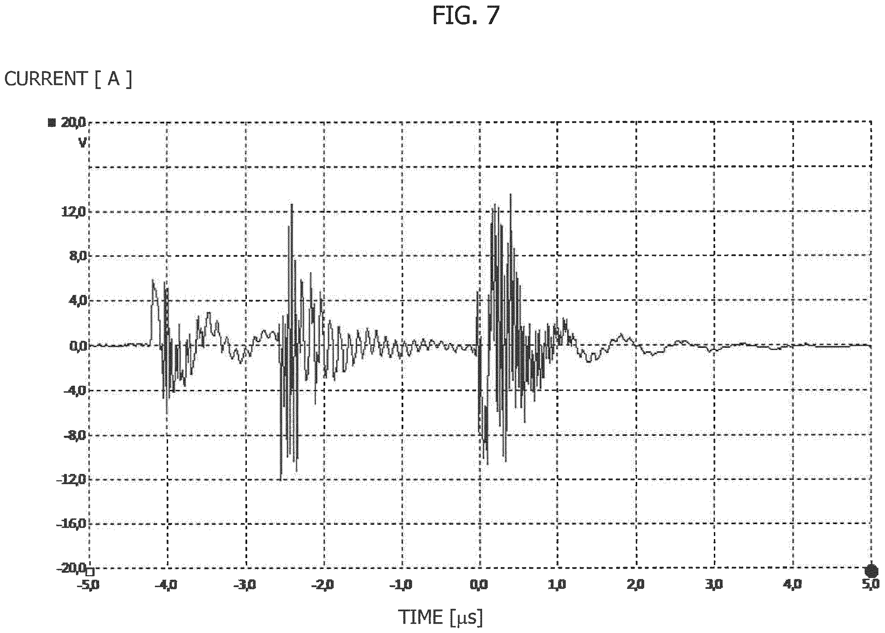

With reference to Figures 6 and 7, note how the discharge in the high-voltage switch 6 gives rise to a certain variability of operation of the device 4.

In particular, the person skilled in the branch will appreciate how the characteristics of the voltage signal across the electrodes 18, 20 markedly depend upon the characteristics of the discharge that is triggered within the high-voltage switch 6, which may vary also in the intervals between one pulse and the next.

This may be due, for example, to even minor variations of the relative humidity of the air present in the high-voltage switch between the electrodes 22 and 24 or to variations in the composition of the air itself (for example, owing to the presence of ionized species) .

Not only this, but, as may be noted in Figures 6A, 6B, the discharge in the high-voltage switch 6 induces formation of damping oscillations in the voltage signal across the electrodes 18, 20, which consist of secondary electric discharges within the high-voltage switch 6 that induce phenomena of discharge, that are likewise oscillating, between the electrodes 18, 20.

As may be noted from Figures 6A and 6B, it is moreover possible for some successive voltage pulses even to overlap one another on account of setting-up of the above damping oscillations.

In this connection, Figure 6A shows a voltage signal obtained during a test arc discharge in 100 ml of methylene-blue solution with a concentration of 1 ppm and a pH of 5.6. The voltage signal has two peaks P1 and P2, which are separated by intervals and followed by extremely evident damping oscillations.

Instead, a second test discharge conducted on the same solution highlights formation of three peaks P1, P2, P3 once again separated by intervals and followed by damping oscillations.

Nevertheless, with reference to Figure 7, it should be noted that the same phenomenon of damping oscillations regards also the current signal through the electrodes 18, 20.

Once again with reference to Figures 6A and 6B, the former in particular represents an operating condition where the width of the gap G6 of the high-voltage switch 6 is smaller, in so far as the pulses occur at a distance in the region of 1 µs from one another and are characterized by a voltage peak of approximately 70-80 kV. In this case, on account of the high frequency at which the phenomenon of charging and discharging of the high-voltage switch 6 occurs, it is possible for the time constant of the damping oscillations to be such that the duration of the latter extends up to the moment when the next voltage peak would ideally take place, thus leading to a degeneration of the third peak into a damped signal.

Instead, the second (Figure 6B) represents in particular an operating condition in which the width of the gap of the high-voltage switch 6 is greater: the voltage signal is characterized by peaks set at a distance of approximately 1.5 µs apart with values of peak voltage of even 110 kV.

In this case, on account of the lower frequency of the processes of discharge of the high-voltage switch 6, the time constants of the damping oscillations are in any case not sufficient to degrade the subsequent voltage peaks, so that the a third peak P3 appears - albeit of very reduced amplitude - downstream of the second peak P2.

Thanks to the system 1 and the device 4 according to the invention (and to the innumerable possible regulations), as well as to the method of treatment based upon application of a pulsed electrical signal it is possible to treat any contaminated liquid effluent without resorting to a plurality of different treatment sources as is the case in known solutions.

With the treatment device, system, and method according to the invention, the very electric discharge between the electrodes 18, 20 already has characteristics such as not to induce dissipation of energy and, simultaneously, emit ultraviolet radiation for treatment, by means of a photocatalyst, of the residual noxious species within the liquid effluent.

Of course, the details of construction and the embodiments may vary widely with respect to what has been described and illustrated herein, without thereby departing from the scope of the present invention, as defined by the annexed claims.

For instance, in alternative embodiments it is possible to use electrodes 18, 20 having an identical shape, for example a pair of tip electrodes.

## Claims

1. A method for supplying a plasma treatment device (4) for liquid effluents, wherein the device comprises a casing defining a treatment volume and a first electrode (18) and a second electrode (20) which face into said treatment volume, the method comprising the steps of:
- providing a supply source (8) coupled to a pulse generator (9) including a high-voltage generator (10) and a nanopulse generator (12);
- connecting said first electrode (18) to a high-voltage electrode (14) of said nanopulse generator (12) ;
- providing a high-voltage switch (6) having a variable width discharge gap (G6) comprised between a third electrode (22) and a fourth electrode (24), wherein said third electrode (22) is connected to said second electrode (20), and said fourth electrode (24) is connected to a ground electrode (16) of said nanopulse generator (12); and
- supplying a circuit of said nanopulse generator (12) and activating one or more discharges thereof so as to generate corresponding one or more voltage pulses resulting in corresponding one or more electric discharges between said first electrode (18) and said second electrode (20),
wherein each electric discharge occurs when a voltage value of said voltage pulse reaches a threshold value that causes dielectric breakdown in said variable width discharge gap (G6),
the method further including modulating a peak voltage value of each voltage pulse, and the frequency of successive voltage pulses by variation of the width of the discharge gap (G6) of said high-voltage switch (6),
wherein each voltage pulse has a duration comprised between 10 ns and 100 µs, and
wherein each voltage pulse has and amplitude comprised between 1 and 110 kV.

2. A system (1) for the treatment of liquid effluents by means of electric discharges configured to carry out the method of Claim 1, the system comprising:
- a treatment device (4) including a casing (17) defining a treatment volume and a first electrode (18) and a second electrode (20) set opposed to one another and facing into said reaction volume;
- an inlet orifice (4IN) configured for the inlet of a flow rate of liquid effluent to be treated into said treatment volume and at least one outlet orifice (4OUT_1, 4OUT_2) configured for receiving and disposing the liquid effluent treated in said treatment volume;
- a pulse generator (9) including a high-voltage generator (10) coupled to a nanopulse generator (12), said nanopulse generator (12) having a high-voltage electrode (14) connected to said first electrode (18); and
- a high-voltage switch (6) having a variable width discharge gap (G6) defined between a third electrode (22) and a fourth electrode (24), wherein said third electrode (22) is connected to said second electrode (20), whereas said fourth electrode (24) is connected to a ground electrode (16) of said nanopulse generator (12).

3. The system (1) of Claim 2, wherein said treatment device (4) includes:
- a casing (17) defining a treatment volume; and
- a first electrode (18) and a second electrode (20) opposed to one another and facing into said treatment volume,
wherein:
- said treatment volume is divided into a core section (CS), into which said first and second electrodes (18, 20) face, and a shell section (SS) that surrounds said core section (CS);
- in said shell section (SS) there is provided a jacket (34) for treatment of the liquid effluent including a plurality of beads coated with a photocatalyst; and
- the casing includes an inlet orifice (4IN) for the inlet of a flow rate of effluent to be treated, which is in fluid communication with said core section (CS), and at least one outlet orifice (4OUT_1, 4OUT_2), which is configured for disposing of the flow of treated liquid effluent and which is in fluid communication with said shell section (SS); and
- wherein at least one of said first and second electrodes (18, 20) is movable with respect to the other for varying the width of a discharge gap (G4) between them.

4. The treatment device (4) according to Claim 3, wherein said treatment jacket (34) includes a plurality of silica microbeads.

5. The treatment device (4) according to Claim 3 or Claim 4, wherein said photocatalyst is titanium dioxide.

6. The treatment device (4) according to any one of Claims 3 to 5, wherein said first electrode (18) is a tip electrode (18A), and said second electrode (20) is a flat electrode (20A).

7. The treatment device (4) according to any one of Claims 3 to 6, wherein said core section (CS) is separated from said shell section (SS) by means of a septum (30), which is fixed to a first end plate (26) and a second end plate (28) of said casing (17) and defines:
- an annular transfer chamber (32), which is in fluid communication (31) with said core section (CS) and is configured for receiving the liquid effluent treated in the discharge gap (G4) between said first and second electrodes (18, 20);
- said treatment jacket (34); and
- an annular collecting chamber (36) in fluid communication with said at least one outlet orifice (4OUT_1, 4OUT_2).

8. The treatment device (4) according to Claim 7, wherein said treatment jacket (34) is separated from said annular transfer chamber (32) and annular collecting chamber (36) by means of a first annular filter (F1) and a second annular filter (F2), respectively.

9. The treatment device (4) according to any one of Claims 3 to 8, wherein said first electrode (18) includes a jacket 29) of vitreous material.

10. The treatment device (4) according to Claim 5 or Claim 9, wherein said first electrode (18) is made of tungsten, and said second electrode (20) is made of graphite.

## Patentansprüche

1. Verfahren zur Versorgung einer Plasmabehandlungsvorrichtung (4) für ausströmende Abwässer, wobei die Vorrichtung ein Gehäuse, das ein Behandlungsvolumen festlegt, und eine erste Elektrode (18) und eine zweite Elektrode (20) aufweist, die in das Behandlungsvolumen weisen, wobei das Verfahren die folgenden Schritte umfasst:
- Bereitstellen einer Versorgungsquelle (8), die mit einem Impulsgenerator (9) verbunden ist, der einen Hochspannungsgenerator (10) und einen Nano-Puls-Generator (12) enthält;
- Anschließen der ersten Elektrode (18) an eine Hochspannungselektrode (14) des Nano-Puls-Generators (12);
- Bereitstellen eines Hochspannungsschalters (6) mit einer Entladungsstrecke veränderlicher Breite (G6), die zwischen einer dritten Elektrode (22) und einer vierten Elektrode (24) eingeschlossen ist, wobei die dritte Elektrode (22) mit der zweiten Elektrode (20) verbunden ist und die vierte Elektrode (24) mit einer Masseelektrode (16) des Nano-Puls-Generators (12) verbunden ist; und
- Versorgen eines Stromkreises des Nano-Puls-Generators (12) und Anstoßen einer oder mehrerer Entladungen desselben, um einen entsprechenden oder mehrere Spannungsimpulse zu erzeugen, die zu einer entsprechenden oder mehreren elektrischen Entladungen zwischen der ersten Elektrode (18) und der zweiten Elektrode (20) führen,
wobei jede elektrische Entladung auftritt, wenn ein Spannungswert des Spannungsimpulses einen Schwellenwert erreicht, der einen Durchschlag in der Entladungsstrecke veränderlicher Breite (G6) bewirkt,
wobei das Verfahren des Weiteren das Modulieren eines Spitzenspannungswerts jedes Spannungsimpulses und der Frequenz aufeinanderfolgender Spannungsimpulse durch Veränderung der Breite der Entladungsstrecke (G6) des Hochspannungsschalters (6) umfasst,
wobei jeder Spannungsimpuls eine Dauer zwischen 10 ns und 100 µs aufweist, und
wobei jeder Spannungsimpuls eine Amplitude zwischen 1 und 110 kV aufweist.

2. System (1) zur Behandlung von ausströmenden Abwässern mittels elektrischer Entladungen, das gestaltet ist, das Verfahren nach Anspruch 1 durchzuführen, wobei das System umfasst:
- eine Behandlungsvorrichtung (4) mit einem Gehäuse (17), das ein Behandlungsvolumen festlegt, und einer ersten Elektrode (18) und einer zweiten Elektrode (20), die entgegengesetzt zueinander eingesetzt sind und in das Reaktionsvolumen weisen;
- eine Einlassöffnung (4IN), die für den Eintritt einer Durchflussmenge von zu behandelndem, ausströmendem Abwasser in das Behandlungsvolumen gestaltet ist, und zumindest eine Auslassöffnung (4OUT_1, 4OUT_2), die zum Aufnehmen und Entsorgen des im Behandlungsvolumen behandelten ausströmenden Abwassers gestaltet ist;
- einen Impulsgenerator (9) mit einem Hochspannungsgenerator (10), der mit einem Nano-Puls-Generator (12) gekoppelt ist, wobei der Nano-Puls-Generator (12) eine mit der ersten Elektrode (18) verbundene Hochspannungselektrode (14) aufweist; und
- einen Hochspannungsschalter (6) mit einer Entladungsstrecke veränderlicher Breite (G6), die zwischen einer dritten Elektrode (22) und einer vierten Elektrode (24) festgelegt ist, wobei die dritte Elektrode (22) mit der zweiten Elektrode (20) verbunden ist, wogegen die vierte Elektrode (24) mit einer Masseelektrode (16) des Nano-Puls-Generators (12) verbunden ist.

3. System (1) nach Anspruch 2, wobei die Behandlungsvorrichtung (4) umfasst:
- ein Gehäuse (17), das ein Behandlungsvolumen festlegt; und
- eine erste Elektrode (18) und eine zweite Elektrode (20), die einander gegenüberliegen und in das Behandlungsvolumen weisen,
wobei:
- das Behandlungsvolumen in einen Kernabschnitt (CS) geteilt ist, in den die erste und die zweite Elektrode (18, 20) weisen, und einen Schutzabschnitt (SS), der den Kernabschnitt (CS) umgibt;
- in dem Schutzabschnitt (SS) ein Mantel (34) vorgesehen ist zur Behandlung des ausströmenden Abwassers, der eine Vielzahl von mit einem Photokatalysator beschichteten Kügelchen enthält; und
- das Gehäuse eine Einlassöffnung (4IN) zum Eintritt einer Durchflussmenge von zu behandelndem Abwasser, die sich mit dem Kernabschnitt (CS) in fluidleitender Verbindung befindet, und zumindest eine Auslassöffnung (4OUT_1, 4OUT_2) aufweist, die zum Entsorgen des Durchflusses von behandeltem, ausströmendem Abwasser gestaltet ist und die sich mit dem Schutzabschnitt (SS) in fluidleitender Verbindung befindet; und
- wobei zumindest eine der ersten und zweiten Elektroden (18, 20) relativ zu der anderen bewegbar ist, um die Breite einer Entladungsstrecke (G4) zwischen ihnen zu verändern.

4. Behandlungsvorrichtung (4) nach Anspruch 3, wobei der Behandlungsmantel (34) eine Vielzahl von winzigen Quarzkügelchen enthält.

5. Behandlungsvorrichtung (4) nach Anspruch 3 oder Anspruch 4, wobei der Photokatalysator Titandioxid ist.

6. Behandlungsvorrichtung (4) nach einem der Ansprüche 3 bis 5, wobei die erste Elektrode (18) eine Stiftelektrode (18A) ist und die zweite Elektrode (20) eine Flachelektrode (20A) ist.

7. Behandlungsvorrichtung (4) nach einem der Ansprüche 3 bis 6, wobei der Kernabschnitt (CS) von dem Schutzabschnitt (SS) durch eine Membran (30) getrennt ist, die an einer ersten Stirnplatte (26) und einer zweiten Stirnplatte (28) des Gehäuses (17) befestigt ist und definiert:
- eine ringförmige Übertragungskammer (32), die sich in fluidleitender Verbindung (31) mit dem Kernabschnitt (CS) befindet und gestaltet ist zum Aufnehmen des ausströmenden Abwassers, das in der Entladungsstrecke (G4) zwischen der ersten und der zweiten Elektrode (18, 20) behandelt wird;
- den Behandlungsmantel (34); und
- eine ringförmige Sammelkammer (36) in fluidleitender Verbindung mit mindestens der einen Auslassöffnung (4OUT_1, 4OUT_2).

8. Behandlungsvorrichtung (4) nach Anspruch 7, wobei der Behandlungsmantel (34) von der ringförmigen Übertragungskammer (32) und der ringförmigen Sammelkammer (36) durch einen ersten Ringfilter (F1) bzw. einen zweiten Ringfilter (F2) getrennt ist.

9. Behandlungsvorrichtung (4) nach einem der Ansprüche 3 bis 8, wobei die erste Elektrode (18) eine Umhüllung (29) aus glasartigem Material aufweist.

10. Behandlungsvorrichtung (4) nach Anspruch 5 oder Anspruch 9, wobei die erste Elektrode (18) aus Wolfram besteht und die zweite Elektrode (20) aus Graphit besteht.

## Revendications

1. Procédé d'alimentation d'un dispositif de traitement au plasma (4) d'effluents liquides, dans lequel le dispositif comprend un boîtier définissant un volume de traitement et une première électrode (18) et une deuxième électrode (20) qui sont tournées vers ledit volume de traitement, le procédé comprenant les étapes consistant :
- à fournir une source d'alimentation (8) couplée à un générateur d'impulsions (9) comportant un générateur de haute tension (10) et un générateur de nano-impulsions (12) ;
- à relier ladite première électrode (18) à une électrode haute tension (14) dudit générateur de nano-impulsions (12) ;
- à fournir un commutateur haute tension (6) ayant un espace de décharge à largeur variable (G6) compris entre une troisième électrode (22) et une quatrième électrode (24), où ladite troisième électrode (22) est reliée à ladite deuxième électrode (20), et ladite quatrième électrode (24) est reliée à une électrode de masse (16) dudit générateur de nano-impulsions (12) ; et
- à fournir un circuit dudit générateur de nano-impulsions (12) et à activer une ou plusieurs décharge(s) de celui-ci de manière à générer une ou plusieurs impulsion(s) de tension correspondante(s) résultant en une ou plusieurs décharge(s) électrique(s) entre ladite première électrode (18) et ladite deuxième électrode (20),
dans lequel chaque décharge électrique se produit lorsqu'une valeur de tension de ladite impulsion de tension atteint une valeur seuil qui provoque une rupture diélectrique dans ledit espace de décharge à largeur variable (G6),
le procédé comportant en outre la modulation d'une valeur de tension de crête de chaque impulsion de tension, et la fréquence d'impulsions de tension successives par variation de la largeur de l'espace de décharge (G6) dudit commutateur haute tension (6),
dans lequel chaque impulsion de tension a une durée comprise entre 10 ns et 100 µs, et
dans lequel chaque impulsion de tension a une amplitude comprise entre 1 et 110 kV.

2. Système (1) de traitement d'effluents liquides au moyen de décharges électriques configuré pour mettre en oeuvre le procédé de la revendication 1, le système comprenant :
- un dispositif de traitement (4) comportant un boîtier (17) définissant un volume de traitement et une première électrode (18) et une deuxième électrode (20) placées opposées l'une à l'autre et tournées vers ledit volume de réaction ;
- un orifice d'entrée (4IN) configuré pour l'entrée d'un débit d'effluent liquide à traiter dans ledit volume de traitement et au moins un orifice de sortie (4OUT_1, 4OUT_2) configuré pour recevoir et éliminer l'effluent liquide traité dans ledit volume de traitement ;
- un générateur d'impulsions (9) comportant un générateur de haute tension (10) couplé à un générateur de nano-impulsions (12), ledit générateur de nano-impulsions (12) ayant une électrode haute tension (14) reliée à ladite première électrode (18), et
- un commutateur haute tension (6) ayant un espace de décharge à largeur variable (G6) défini entre une troisième électrode (22) et une quatrième électrode (24), où ladite troisième électrode (22) est reliée à ladite deuxième électrode (20), alors que ladite quatrième électrode (24) est reliée à une électrode de masse (16) dudit générateur de nano-impulsions (12).

3. Système (1) de la revendication 2, dans lequel ledit dispositif de traitement (4) comporte :
- un boîtier (17) définissant un volume de traitement ; et
- une première électrode (18) et une deuxième électrode (20) opposées l'une à l'autre et tournées vers ledit volume de traitement,
dans lequel :
- ledit volume de traitement est divisé en une section de noyau (CS), vers laquelle lesdites première et deuxième électrodes (18, 20) sont tournées, et une section d'enveloppe (SS) qui entoure ladite section de noyau (CS) ;
- dans ladite section d'enveloppe (SS), une chemise (34) est prévue pour le traitement de l'effluent liquide comportant une pluralité de billes revêtues de photo-catalyseur ; et
- le boîtier comporte un orifice d'entrée (4IN) pour l'entrée d'un débit d'effluent à traiter, qui est en communication fluidique avec ladite section de noyau (CS), et au moins un orifice de sortie (4OUT_1, 4OUT_2), qui est configuré pour éliminer le flux d'effluent liquide traité et qui est en communication fluidique avec ladite section d'enveloppe (SS) ; et
- dans lequel au moins l'une desdites première et deuxième électrodes (18, 20) est mobile par rapport à l'autre pour faire varier la largeur d'un espace de décharge (G4) entre elles.

4. Dispositif de traitement (4) selon la revendication 3, dans lequel ladite chemise de traitement (34) comporte une pluralité de microbilles de silice.

5. Dispositif de traitement (4) selon la revendication 3 ou 4, dans lequel ledit photo-catalyseur est le dioxyde de titane.

6. Dispositif de traitement (4) selon l'une quelconque des revendications 3 à 5, dans lequel ladite première électrode (18) est une électrode de pointe (18A), et ladite deuxième électrode (20) est une électrode plate (20A).

7. Dispositif de traitement (4) selon l'une quelconque des revendications 3 à 6, dans lequel ladite section de noyau (CS) est séparée de ladite section d'enveloppe (SS) au moyen d'un septum (30), qui est fixé à une première plaque d'extrémité (26) et à une deuxième plaque d'extrémité (28) dudit boîtier (17) et définit :
- une chambre de transfert annulaire (32), qui est en communication fluidique (31) avec ladite section de noyau (CS) et est configurée pour recevoir l'effluent liquide traité dans l'espace de décharge (G4) entre lesdites première et deuxième électrodes (18, 20) ;
- ladite chemise de traitement (34) ; et
- une chambre de collecte annulaire (36) en communication fluidique avec ledit au moins un orifice de sortie (4OUT_1, 4OUT_2).

8. Dispositif de traitement (4) selon la revendication 7, dans lequel ladite chemise de traitement (34) est séparée de ladite chambre de transfert annulaire (32) et de ladite chambre de collecte annulaire (36) au moyen d'un premier filtre annulaire (F1) et d'un deuxième filtre annulaire (F2) respectivement.

9. Dispositif de traitement (4) selon l'une quelconque des revendications 3 à 8, dans lequel ladite première électrode (18) comporte une chemise (29) de matériau vitreux.

10. Dispositif de traitement (4) selon la revendication 5 ou 9, dans lequel ladite première électrode (18) est réalisée en tungstène et ladite deuxième électrode (20) est réalisée en graphite.
